Europäisches Patentamt

European Patent Office

Office européen des brevets

(19)

(11) Publication number: **0 004 117**
**B1**

## (12) EUROPEAN PATENT SPECIFICATION

(45) Date of publication of patent specification: **19.05.82**

(21) Application number: **79200111.7**

(22) Date of filing: **06.03.79**

(51) Int. Cl.³: **F 16 C 32/04,**
**G 01 B 11/14, G 02 B 5/16,**
**G 05 F 7/00, H 02 K 7/09**

(54) Magnetic bearing system, comprising a servo-system for regulating the electromagnetic action of the bearing system, and electric motor coupled to the bearing system.

(30) Priority: **08.03.78 NL 7802553**

(43) Date of publication of application:
**19.09.79 Bulletin 79/19**

(45) Publication of the grant of the patent:
**19.05.82 Bulletin 82/20**

(84) Designated Contracting States:
**CH DE FR GB IT NL SE**

(56) References cited:
**FR - A - 1 409 565**
**FR - A - 2 112 717**
**FR - A - 2 149 644**
**FR - A - 2 213 507**
**GB - A - 1 080 726**
**GB - A - 1 276 115**
**GB - A - 1 342 919**
**NL - A - 76 05725**
**US - A - 3 575 129**
**US - A - 3 370 205**
**US - A - 3 908 444**
**US - A - 4 049 349**

(73) Proprietor: **SKF Industrial Trading & Development Company B.V.**
**Kelvinbaan 16 P.O. Box 50**
**NL-3430 AB Nieuwegein (NL)**

(72) Inventor: **Kapaan, Jan Hendrikus**
**Wegahof 14**
**NL-3402HV IJsselstein (NL)**

(74) Representative: **Merkelbach, B.**
**SKF Engineering & Research Centre B.V. P.O. Box 50 Plettenburgerweg 6A**
**NL-3430 AB Nieuwegein (NL)**

Courier Press, Leamington Spa, England.

Magnetic bearing system, comprising a servo-system for regulating the electromagnetic action
of the bearing system, and electric motor coupled to the bearing system

The invention relates to a magnetic bearing system comprising a stationary part, for example a stator part, a movable part, for example a rotor part, and electromagnetic means serving to hold the stationary part and the movable part at a distance from each other by electromagnetic action in operating condition so that the movable part is supported movable relative to the stationary part. The invention relates likewise to a servo system whereof such electromagnetic means are a component part, arranged so to regulate the electromagnetic action whereby the stationary or stator part and the movable or rotor part are held at a distance from each other that the clearance between the stationary or stator part and the movable or rotor part remains substantially constant.

The invention thus relates both to bearing systems permitting a rotary motion (rotation) and to bearing systems permitting a displacement (translation). In the following, for the sake of simplicity, the expressions stator part and rotor part will generally be used, without thereby implying that the embodiments referred to are limited thereto.

Such magnetic bearing systems in which there is no mechanical contact between the stator part and the rotor part thereof have been developed in the field of space technology. In order to keep the clearance between the stator part and the rotor part substantially constant in operating condition of the bearing, use is made of electromagnetic sensors that are able to transform variations occurring in the radial distance between the rotor part and the stator part during operation into a corresponding electric control signal on the basis of which the electromagnetic means holding the rotor part and the stator part at a distance from each other by electromagnetic action are adjusted in such manner that the said variation in radial distance is counteracted, so that substantially constant air gap can be maintained. French patent 2.149.644 discloses a magnetic bearing having a distance-regulating system between a stator and rotor part, which system is provided with photo-diode sensors.

Although such a known magnetic bearing provides important technical advantage and possesses high service dependability and long service life, the use of electromagnetic or photo diode sensors involves engineering difficulties, i.e. rather complicated electronic measuring and regulating systems, while the regulating action is also subject to certain limitations.

Now the object of the invention is to eliminate the disadvantages affecting this prior art, while otherwise retaining the favorable technical properties proceeding therefrom. In this way it is intended to enhance the versatility of such bearing systems in application.

In the above mentioned prior art, the basis of the control effect is that a variation in distance manifests itself as a corresponding variation in the reluctance of a magnetic circuit of a sensor, from which variation in reluctance an electric control signal is derived, on the basis of which the electromagnetic action may then be controlled as a function of the respective variations in distance between the rotor part and the stator part of the bearing system. The principle of the present invention is to derive such a control signal by electro-optical means. More specifically, a magnetic bearing system according to the invention is characterized by fiber optical means for conveying light rays along separate paths to and from an interval between the stationary or stator part and the movable or rotor part of the bearing system. Advantageously, such fiber optical means may take the form of a plurality of separate optical fibers, each arranged for two-way light transmission, each such fiber being threaded through a passage provided for it in the respective bearing part, as for example the stator part or the rotor part. Thus it is possible in a simple and reliable manner, at several locations, to pick up variations occurring during operation of a bearing system in the clearance between the movable or rotor part and the stationary or stator part, and involve them in a control process whereby such a clearance, more specifically a radial and/or axial distance between movable or rotor part and stationary or stator part of a bearing system, may be kept constant. It will be clear that although the expressions rotor part and stator part are used in the following, the invention is also applicable to bearing systems in which one part is carried displaceable relative to another part so that a rectilinear motion is possible.

The optical fibers are preferably so arranged that the light transmitted into the interval between rotor part and stator part of a bearing system, in the form of a member of beams of light equal to the member of fibers used, falls perpendicularly on the surface of the bearing part from which this light is to be reflected to the fiber in question. To promote such reflection, as well as to minimize the quantity of light to be supplied, it is advantageous for the particular area of the bearing system where such reflecton is to occur to be provided with a highly reflective surface, which may for example be accomplished by having the respective peripheral portion of the bearing part made of metal with a high polish.

Indeed French patent 1.409.565 discloses the application of fiber optics for surface measuring purposes. However it is elucidated that the fiber optics arrangement and its application being different in the regulating and control system of the magnetic bearing device as claimed by this invention.

To procedure a bearing part, for example the stator part, having a plurality of through passages of small cross section to accommodate the optical fibers, use may advantageously made of a process as disclosed in the earlier Netherlands Patent Application 7605725, wherein iron powder with rod-shaped elements of copper or other suitable material arranged in the places where the passages are required is isostatically compacted into the desired shape of the bearing part, whereafter the copper diffuses into the compacted member when sintered. In this way it is possible to form passages of small cross section and any desired shape in the respective bearing part.

Because according to the invention the clearance between the movable or rotor part and the stationary or stator part of a magnetic bearing system is monitored on the basis of quantity of reflected light radiation received by thin optical fibers, the invention offers opportunity to improve a servo system for controlling the electromagnetic action whereby the stator part and the rotor part of such a magnetic bearing system may be kept at a distance from each other, in the sense that even in the case of bearing systems of small size, a precision control whereby such clearance is kept constant is possible. Because use is made of optical fibers, the source of light serving to transmit light rays into the interval between the rotor part and the stator part may be placed in the most convenient design location, as is also true of the electro-optical transducer means optically coupled to the optical fibers to pick up the light transmitted by the source and reflected from the interval and transform it into an electric control signal on the basis of which the electromagnetic action may then be regulated in response to variations in the distance between the rotor part and the stator part. Besides control regarding radial distance and/or axial distance in the gap between the rotor and stator parts of a bearing system, control is also possible regarding an oblique attitude ("tilting") that the rotor part may assume relative to the stator part. Such control can be achieved provided at least two optical fibers are coupled to the space between rotor part and stator part at two locations situated on a line parallel to the longitudinal axis of the bearing and the electro-optical transducer means are included in a control system operating to keep the axially facing surfaces of the rotor and stator parts substantially parallel to each other.

It is likewise possible according to the invention, in an embodiment of simple design, to obtain an accurate speed control if a pattern of markings for tacho signals is provided along a peripheral portion of the rotor part and the stator part contains one or more optical fibers optically coupled to the gap between rotor part and stator part matching the said peripheral portion, the said optical fibers being in that case optically coupled firstly to a source of light to transmit light into the gap and secondly to electro-optical transducer means comprised in turn in a servo system of the kind described above.

The invention may advantageously be applied also to a bearing system in which one part can execute a translation relative to the other. It is thus possible to provide a pattern of markings serving for speed control in the form of an axial stripe on the stationary part for example, in which case, by means of an optical fiber arranged in the movable part to match the said stripe, a control signal depending on speed can be derived, on the basis of which the axially active magnets of the movable part are energized so as to obtain a buffer effect in terms of speed when said part is approaching an extreme position, and the latter can be brought to a stop gradually without violent collision with an arresting member.

The invention may advantageously be employed in combination with an electric motor, where a magnetic bearing system according to the invention operates both in radial direction and in axial direction and is detachably coupled to the stator part and/or the rotor part of the electric motor. According to a further feature of the invention, the bearing system has the advantage of utilizing the fan effect generated by the electric motor as a means of blowing dust and other foreign matter out of the space between the stator part and the rotor part of the magnetic bearing system so as to maintain optimum control.

For further illustration of the invention, some embodiments thereof will now be described with reference to the drawing. In the drawing,

Fig. 1 is a longitudinal section of an embodiment of a magnetic bearing system according to the invention;

Fig. 2 is a cross section at the line II—II in Fig. 1;

Fig. 3 is a graph showing an electric potential as a function of a distance between two parts, for use in describing the operation of the bearing system according to Figs. 1 and 2;

Fig. 4 is a diagram of a servo system in which a magnetic bearing system according to the invention may be incorporated;

Fig. 5 is a longitudinal section of an electric motor provided with two magnetic bearing systems according to the invention;

Fig. 6 is a longitudinal section of an electric motor equipped with a magnetic bearing system according to the invention;

Fig. 7 is a longitudinal section of an alternative embodiment of an electric motor detachably coupled to a magnetic bearing system according to the invention;

Fig. 8 is a longitudinal section, at the line VIII—VIII in Fig. 9, of an embodiment of a bearing system according to the invention in which one part can execute a linear motion relative to a stationary part, and experiences an electromagnetic buffer effect upon approaching an extreme position; and

Fig. 9 is a cross section of this embodiment at the line IX—IX in Fig. 8.

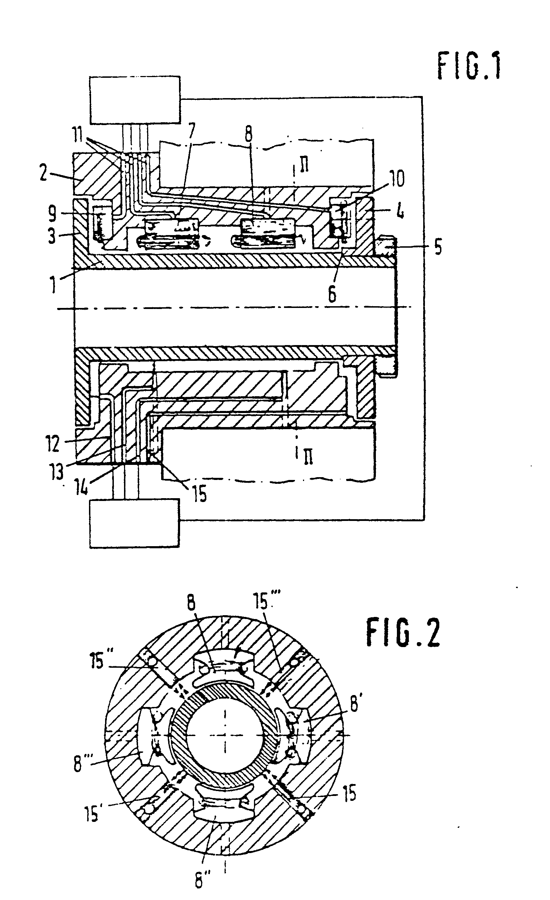

The magnetic bearing system according to the invention as represented in Fig. 1 operates in both radial and axial directions. This bearing system comprises a rotor part 1 and a stator part 2. The rotor part is here made in the form of a hollow shaft provided at one end with a flange 3 fixed thereto and at the other end with a removable flange 4 capable of being pressed, by means of a nut 5, against a shoulder 6 formed on the outer surface of the rotor part. The stator part is a hollow, substantially cylindrical member, enclosing the rotor part. On the internal surface facing the cylindrical outer surface of the rotor part, electromagnets such as 7 and 8 are arranged evenly distributed over the circumference. As further illustrated in Fig. 2, the magnet 8 with associated magnets 8', 8" and 8''' arranged in the same plane and the rotor part 1 for an air gap, which, when said electromagnets are energized, can be maintained so that the rotor part is supported rotatable relative to the stator part. In addition to these radially active electromagnets, the magnetic bearing system is provided also with axially operative magnets 9 and 10, likewise arranged at equal intervals circumferentially. Between these magnets and the flanges 3 and 4 of the rotor part, air gaps are contained likewise, and can be maintained when these magnets are energized. To energize the magnets, passages such as 11 are provided in the stator part, through which are threaded the electric conductors connected to the respective magnets for energizing them.

Further, passages such as 12, 13, 14 and 15 are formed in the stator part 2, where Fig. 2 more clearly indicates (for passages such as 15) how these are arranged at equal circumferential intervals (Fig. 2; 15, 15', 15", 15'''). Through each of these passages such as 12, 13, 14, 15, an optical fiber is threaded, each of said optical fibers being arranged for two-way transmission of light radiation. In this way it is possible, by way of one of the channels in each of these optical fibers, to transmit light from a source located outside the bearing system into the space between the stator part and the rotor part in the sense that from the respective point at which the respective optical fiber is optically coupled to the gap, a beam of light can be transmitted to the facing surface portion of the rotor part. This light is reflected by the respective rotor part and received back by the respective optical fiber, whereupon the reflected light thus received can be conducted back by way of the other channel of the optical fiber in question to a place outside the magnetic bearing system where the reflected radiation is received.

In this way it is possible to detect the clearance bounded by the rotor part and the stator part in several locations, any variation in the mutual distance between the rotor part and the stator part of the bearing system resulting in a corresponding variation of the locally reflected light, which variation in reflected light may then be utilized for control purposes. The light received on reflection by an optical fiber and conducted outside the bearing system may for example be received by an electro-optical transducer capable of transforming the light radiation received into a corresponding electric signal. By way of illustration, a corresponding electric signal. By way of illustration, Fig. 3 shows a graph of the magnitude of such an electric signal as a function of the distance existing at the location where an optical fiber is coupled to the space between rotor part and stator part of the bearing. In Fig. 2, the beams of light conducted in by an optical fiber and the beams of light reflected from the rotor part are schematically represented by lines of arrowheads. In Fig. 3, the abscissas are distances d in the micrometers (indicated by $\mu m$), while the ordinates are voltages in microvolts (indicated by $\mu V$). The substantially linear portion (indicated by d1) of the voltage curve shown in Fig. 3 is available for purposes of the invention. The angle $\alpha$ indicated in Fig. 3 between the said substantially linear portion and the horizontal axis, which is a measure of the sensitivity of the distance measuring system, depends on the form and design of the optical fiber used to conduct the light radiation. The operating point (indicated by x) is preferably so chosen that the maximum variation in distance d to the expected in either positive or negative direction results in the same magnitude of variation in voltage. Depending on the optical fibers used, the horizontal coordinate determining the point of operation may for example range from 10 to 600 micrometers. Fig. 3 shows that upon an increase (decrease) in distance between the stator part and the rotor part at the location where the optical fiber in question is optically coupled to the gap, the quantity of reflected light received by the fiber in question becomes greater (less), which results in an increase (decrease) of the voltage generated by the electro-optical transducer optically coupled to the optical fiber in question.

The stator part described with reference to Figs. 1 and 2, with passages therein accommodating the respective optical fibers and the electric conductors to energize the electromagnets, may advantageously be produced by a process, known *per se*, as described in Netherlands Patent Application 7605725. According to this earlier specification, the starting material is iron powder, in which as many elongated copper elements are introduced in the locations where passages are required. Such a body of iron powder with copper elements arranged therein is then isostatically compacted into the desired final shape, after which the whole is sintered so that it remains in the mold and the passages are hollowed out in the desired manner. For during the sintering operation, the copper elements undergo dissolution and infiltrate the pores of the product, thus finally leaving a hollow passage with a supersaturated wall.

To increase the reflecting power as well as to minimize the quantity of light to be transmitted in, it is advisable further to render those peripheral portions of the rotor part of the magnetic bearing system which are to cooperate with the optical fibers highly reflective to light, which may for example be accomplished by having the rotor part of metal with a highly polished finish at that point. Alternatively, the peripheral portions in question may be provided with a vapor-condensed layer of reflective metal.

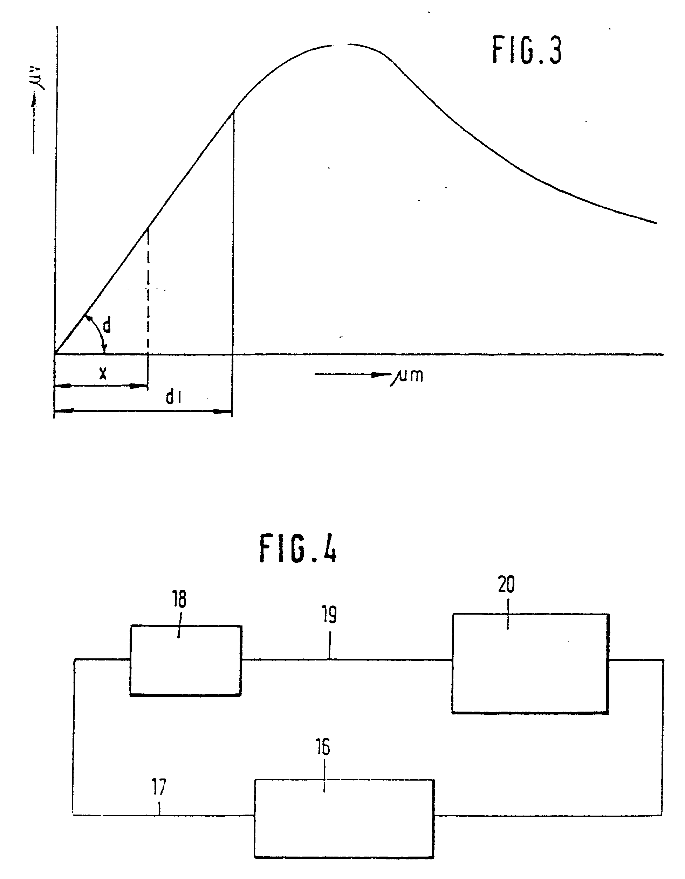

Fig. 4 shows a diagram of a servo system in which a magnetic bearing system according to the present invention may be incorporated. Here 16 schematically indicates a magnetic bearing system according to the invention. The output of an optical fiber by way of which reflected light is received from the rotor part and transmitted is connected by an optical transmission line 17 by way of which light radiation can be transmitted, to an electro-optical transducer 18 capable of transforming an optical signal supplied thereto into a corresponding electric signal. This transducer is connected by an electrical line 19 to a controllable drive unit 20 arranged, on the basis of an electric control signal presented by way of the line 19, to deliver a corresponding energizing current to the respective set of electromagnets such as for example electromagnets 8, 8', 8" and 8'" as represented in Fig. 2. Such a controllable drive unit is of a type known *per se* and is so arranged that in response to a control signal supplied thereto by way of line 19 from transducer 18, an energizing current is delivered to the magnets in question that operates against the perceived variation in distance between the rotor part and the stator part so that a servo mechanism operates on the basis of a control signal generated by way of the optical fiber to counteract a perceived variation in distance so that a substantially constant distance between the rotor part and the stator part of the bearing system is maintained. Thus it is possible to compensate distance variations in radial direction and/or in axial direction between the rotor part and the stator part. Furthermore, it is possible to counteract a tendency to assume an oblique attitude of the rotor part relative to the stator part (tilting), namely by means of pairs of optical fibers threaded through passages such as 13 and 14 (Fig. 1) and optically coupled to the space between the stator part and the rotor part at two locations situated on a line parallel to the longitudinal axis of the bearing, operating in combination in a servo system like that described above with reference to Fig. 4, whereby such a tendency to oblique attitude of the rotor part can be compensated.

In principle, it is possible to use one and the same source of light for several optical fibers operative in different places to monitor the mutual distance between the rotor part and the stator part of a magnetic bearing system. Such a source of light may be optically coupled by simple means to several optical fibers so that light is transmitted thence to the various locations in the space between rotor part and stator part, the output extremities of said optical fibers being then optically coupled by way of separate optical transmission lines to a corresponding electro-optical transducer.

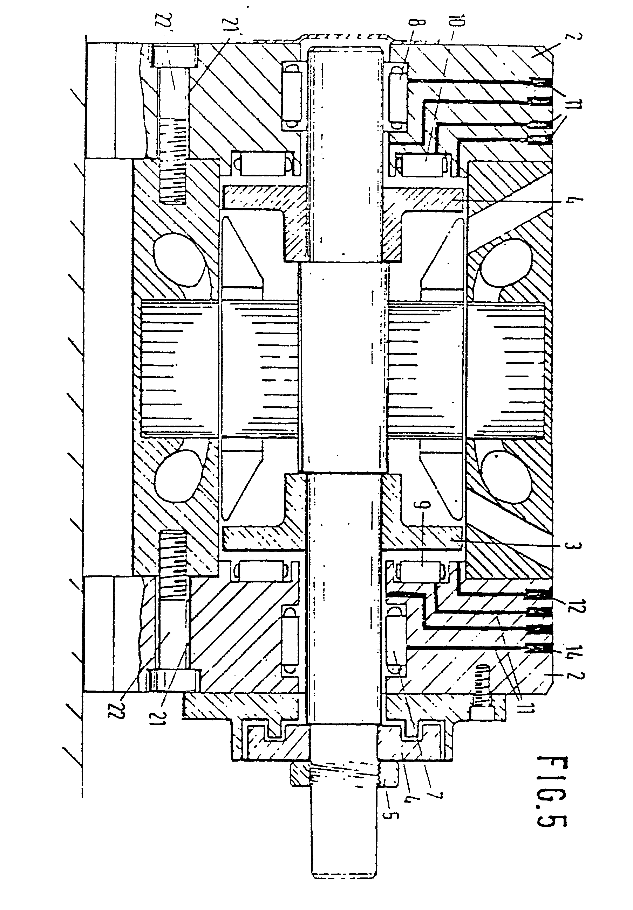

Fig. 5 shows a longitudinal section of an electric motor in which two magnetic bearing systems according to the invention are employed. Each of these magnetic bearing systems is substantially similar to the embodiment shown by way of example in Figs. 1 and 2, with the difference that a magnetic bearing system as used in the embodiment of Fig. 5 comprises only a set of magnets for radial action and one set of magnets for axial action in one direction. Corresponding parts of the embodiment according to Fig. 5 and indicated by the same reference symbols as in Fig. 1. Be it noted that for each of these bearing systems, the rotor part is integral with the shaft of the armature of the electric motor. The stator part of the respective magnetic bearing system is provided with coupling means whereby the bearing system, more specifically the stator part, is coupled to the stator part of the motor. For this purpose, the stator part is provided with peripherally arranged openings through which fastening bolts can be passed so that the stator part may be fastened to the stator housing of the motor. In Fig. 5, for each bearing system only one of these openings 21, 21' and a corresponding fastening bolt 22 and 22' are shown.

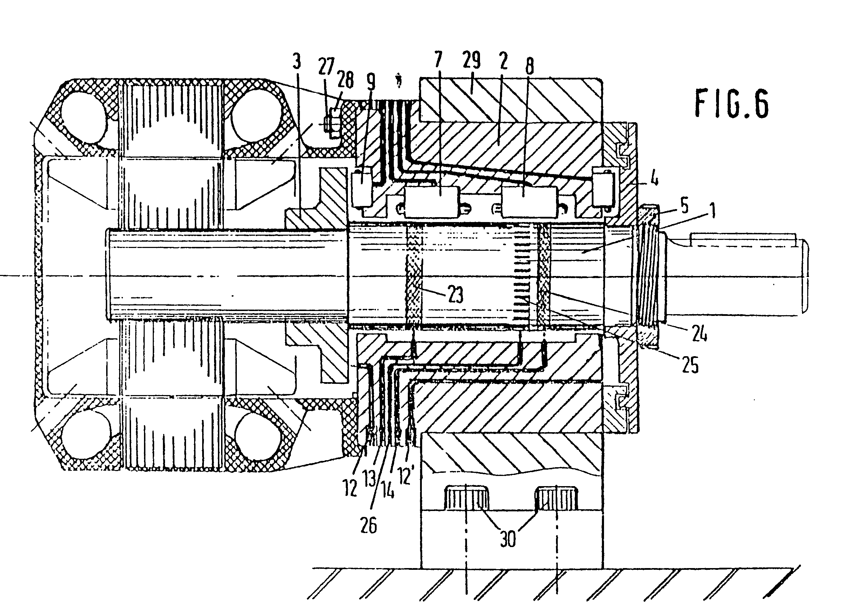

Fig. 6 shows an alternative example of application of a magnetic bearing system according to the invention, more specifically a bearing system of the kind shown in and described with reference to Figs. 1 and 2. Where the same elements are concerned, Figs. 1 and 2 on the one hand and Fig. 6 on the other hand employ the same reference symbols. In the embodiment of Fig. 6 also, the rotor part of the bearing system is fixed to the shaft of the armature of the electric motor. The flange 3 is here fixed to the said shaft by means of a forced connection. The peripheral portions 23 and 24 of the rotor part facing the extremities of the optical fibers 13 and 14 are rendered reflective to light for example by using a polished chromesilver plates ring. Further, the peripheral portion of the rotor part is also provided with a pattern of markings serving for tacho signaling, which pattern is schematically indicated at 25. Optically coupled to the gap at the location of this pattern is an optical fiber 26, likewise arranged for two-way transmission of light. By optically coupling such an optical fiber as 26 firstly to a source of light and secondly to an electro-optical transducer, with the cooperation of the revolving pattern of markings and the optical fiber 26 optically coupled to the dynamic image thereby formed, an electric control signal can be derived on the basis of which the speed of the rotor part can be controlled in operating condition.

As in the embodiment of Fig. 5, the stator part of the magnetic bearing system is detachably coupled to the stator of the electric motor, namely by means of a bolt-and-nut connection 27, 28 of which Fig. 6 shows one set only. The assembly composed of the electric motor and magnetic bearing system is supported in the embodiment of Fig. 6 by an annular frame 29 detachably mounted (bolts 30) on a baseplate.

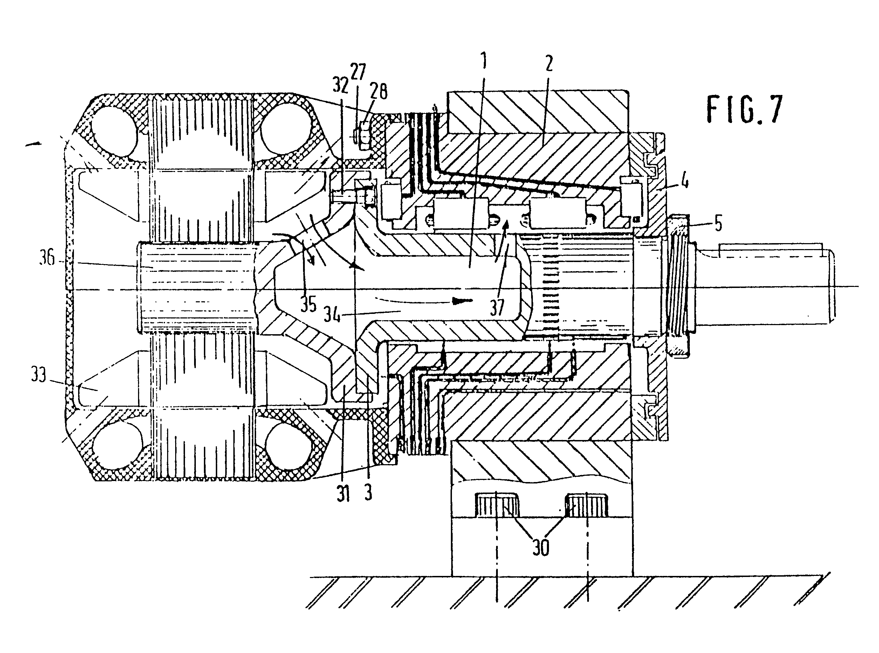

Fig. 7 shows an alternative embodiment of an assembly of an electric motor and a magnetic bearing system according to the invention. The embodiment of Fig. 7 is largely similar to the embodiment of Fig. 6. Where similar parts occur in these figures, the same reference symbols have been used. The most important difference between the embodiment of Fig. 6 and the embodiment of Fig. 7 is that in the embodiment of Fig. 7, the rotor part also of the magnetic bearing is detachably coupled to the armature shaft of the electric motor. For this purpose, the shaft of the electric motor is provided at the end towards the magnetic bearing system with a flange 31 detachably coupled by means of fastening bolts such as 32 to the flange such as 3 of the rotor part of the magnetic bearing system. Much as was the case in the embodiment of Fig. 6, the stator part of the magnetic bearing system is detachably coupled to the stator of the electric motor (bolt-and-nut connections such as 27, 28).

According to a further special feature of the embodiment according to Fig. 7, use may advantageously be made of the operation of the fan 33 normally already present and mounted on the armature of the motor. For in the embodiment of Fig. 7, an attempt is made to create a current of air between the motor space where the fan operates and the space between the rotor part and the stator part of the magnetic bearing system, so that the blast generated by the fan can be utilized also to keep the said interval free from dirt and foreign matter. For this purpose, the end of the rotor part of the magnetic bearing system facing the motor shaft is made hollow, the cavity 34 being in communication by way of one or more openings 35 arranged in the connecting part between the rotor flange 31 and the rotor armature shaft 36 with the interior of the motor where the fan 33 is operative. Further, this cavity 34 is connected by way of one or more openings such as 37 with the interval between the rotor part and the stator part of the magnetic bearing system, so that a current of air set up by the fan 33 may also exert a cleaning action with respect to the said interval.

Obviously, numerous other embodiments and modifications of the embodiments described in the foregoing by way of example can be created by those skilled in this art without departing from the spirit of the invention.

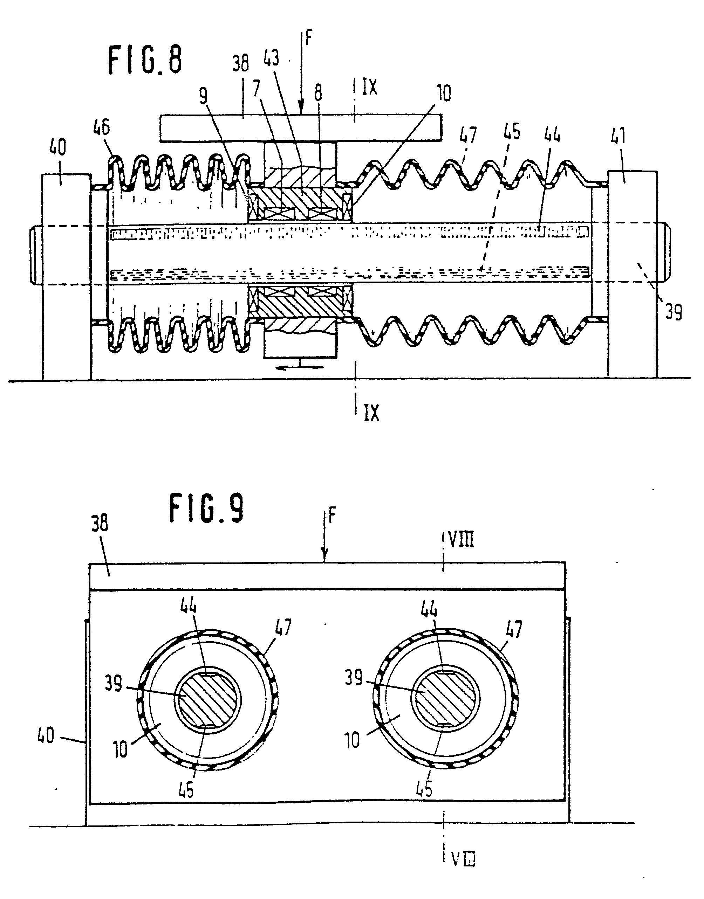

For example, Fig. 8 shows an embodiment of a magnetic bearing system according to the invention in which one part 38 is capable of executing a linear motion relative to a stationary part 39 fixed at both ends to the supporting members 40 and 41 of a frame 42. The part 38 is fixed to an annular member 43 in which, much as in the embodiments previously described, there are arranged electromagnets 7 and 8 operative in radial direction, electromagnets 9 and 10 operative in axial direction, corresponding energizing conductors (not shown), and optical fibers (not shown). The magnets 7 and 8 operate in the same manner as previously described to keep the radial distance between the annular member 43 and the stationary rod-shaped member 39 substantially constant under the control of the mechanism previously described as effected by the respective optical fibers when the part 38 is moved in one direction or the other and/or experiences a radial load F. In connection with this control effect, axial stripes such as 44 of high light-reflecting power are formed along the outer periphery of the stationary part such as 39. Likewise formed along the periphery of the stationary part such as 39 is an axial stripe 45 with a pattern of markings comparable to the pattern of markings described for the embodiment of Fig. 6 to obtain a speed control. In the embodiment of Fig. 8, an optical fiber (not shown) arranged in the annular member 43 is optically coupled to this pattern of markings. The arrangement here is such that the control signal supplied by this optical fiber is directly proportional to the speed of progress of part 38, the axially operative magnets 9 and 10 being energized in accordance with said control signal. The result is a buffer effect in terms of speed, so that part 38 will gradually come to a stop as it approaches an extreme position, and not collide with an arresting member by violent impact. The spring bellows indicated by 46 and 47 in Fig. 8 are intended merely to keep the zone of operation of the electromagnets free from dust and dirt particles.

## Claims

1. Magnetic bearing system comprising a stationary part (2, 39) for example a stator part, a movable part (1, 38) for example a rotor part, and electromagnetic means (7, 8) serving to hold the stationary part (2, 39) and the movable part (1, 38), at a distance from each other by electromagnetic action in operating condition so that the movable part (1, 38) is supported movable relative to the stationary part (2, 39) characterized by fiber optical means for conducting light radiation along separate paths (12—15) to and from a gap between the stationary part (2, 39) and the movable part (1, 38) said optical fiber means emerging in places distributed along the peripheral surface of the stationary part (2, 39) facing the similar shaped peripheral surface of the movable part (1, 38).

2. Magnetic bearing system according to claim 1, characterized in that said fiber optical means comprise a plurality of optical fibers each arranged for two-way transmission of light.

3. Magnetic bearing system according to claim 2, characterized in that one or more of said optical fibers are optically coupled to the said gap where a radial distance exists between the movable part (1, 38) and the stationary part (2, 39).

4. Magnetic bearing system according to claim 2 or 3, characterized in that one or more of said optical fibers are optically coupled to the said gap where an axial distance exists between the movable part (1, 38) and the stationary part (2, 39).

5. Magnetic bearing system according to one or more of the preceding claims, characterized in that a peripheral portion (23, 24, 44) of the stationary part (2, 39) or of the movable part, (1, 38), intended to cooperate with said fiber optical means, is rendered highly reflective to light.

6. Magnetic bearing system according to claim 5, characterized in that such a surface portion is formed by highly polished metal.

7. Magnetic bearing system according to one or more of the preceding claims 2—6, characterized in that the part comprising one or more of the optical fibers is produced with passages (12—15) present therein for said optical fibers by a process known per se in which iron powder with rod-shaped elements of copper or material having a melting point lower than that of iron arranged therein in the places where the passages (12—15) are required, or similar material, is isostatically compacted in the desired shape, and after sintering, the copper or metal is absorbed in the compacted unit forming the passages.

8. Magnetic bearing system according to one or more of the preceding claims 2—7, characterized in that along a peripheral region of the movable part, (2, 39) a pattern of markings (25, 45) for tacho signaling is arranged, and the stationary part comprises one or more optical fibers for two-way light transmission optically coupled to the said gap and located facing the said peripheral region.

9. Magnetic bearing system according to one or more of the preceding claims 1—8, characterized in that the stationary portion (1, 38) is provided with coupling means (21, 21', 22, 22', 27, 28) whereby the bearing system may be detachably coupled to a machine element.

10. Magnetic bearing system according to one or more of the preceding claims 1—9, characterized in that the movable part (2, 39) is provided with coupling means (31, 32) whereby said movable part may be detachably coupled to a machine element.

11. Servo system for regulating electromagnetic action whereby the stationary part (1, 38) and the movable part (2, 39) of a magnetic bearing system may be kept at a distance from each other, characterized by a magnetic bearing system (16) according to one or more of the preceding claims 1—10, a source of light optically coupled to an input end of the fiber optical means, electro-optical transducer means optically coupled to an output end of the fiber optical means to transform light transmitted in from the source and reflected out of the said gap into an electrical control signal on the basis of which the electromagnetic effect can be varied as a function of variations in the distance between the movable part and the stationary part.

12. Servo system according to claim 11, characterized in that at least two optical fibers are optically coupled to the said gap at two points located on a line parallel to the longitudinal axis of the bearing and the electro-optical transducer means (18) are comprised in a control system operating to keep the surfaces of the movable part and the stationary part situated in axial direction substantially parallel to each other.

13. Electric motor coupled to a bearing system according to claim 9, wherein the rotor part of the bearing system is fixedly coupled to the armature shaft of the motor.

14. Electric motor coupled to a bearing system according to claim 10, wherein the rotor part of the bearing system is detachably coupled to the shaft of the armature of the motor.

15. Electric motor according to claim 14, wherein a fan (33) is mounted at the end of the motor shaft (36) away from the side of the bearing system, characterized in that at the end of the bearing rotor part towards the motor armature, an interior space (34) extending axially is hollowed out, the coupling (31, 32) between the motor armature and the bearing system rotor part is provided with one or more openings (35) through which the space in which the fan (33) operates communicates with the said axial space (34), and said axial space (34) in turn communicates with the said gap between the bearing system rotor part and the bearing system stator part, all in such manner that the fan (33) exerts a cleaning action as well.

16. Electric motor according to claim 15, in combination with a servo system according to claim 11 or 12.

17. Electric motor according to claim 14, in combination with a servo system according to claim 12.

18. Servo system according to claim 11, provided with a bearing system according to claim 8, characterized in that the optical fibers optically coupled to the gap facing the said peripheral region where a pattern (25, 45) of markings serving for tacho signaling is arranged are coupled at their output end to electro-optical transducer means (18) in order to transform light transmitted in from the source and reflected out of the said gap into an electric control signal on the basis of which a speed control of a shaft coupled to the rotor part can be obtained.

19. Magnetic bearing system according to one or more of the preceding claims 2—7, characterized in that a pattern of markings serving for speed control is arranged in an axial stripe (45) along a peripheral region of one part, and the other part of the bearing system comprises an optical fiber for two-way transmission of light optically coupled to the said gap and located facing the said stripe (45).

20. Servo system for control of electromagnetic action of a bearing system according to claim 19, characterized by a source of light optically coupled to an input end of the fiber optical means, electro-optical transducer means (18) optically coupled to an output end of the fiber optical means to transform light transmitted in from the source and reflected from the said gap into electric control signals on the basis of which firstly the electromagnetic action in radial direction can be regulated as a function of variations in the distance between the movable part (38) and the stationary part (39), and secondly the electromagnetic action in axial direction can be regulated as a function of the linear velocity of the movable part (38), namely so that a buffer effect is exerted on said part upon approach to an extreme position, so that said part gradually comes to a stop.

**Revendications**

1. Système à palier magnétique comportant une partie fixe (2, 39) par exemple une partie stator, une partie mobile (1, 38), par exemple une partie rotor, et des moyens électromagnétiques (7, 8) servant à maintenir la partie fixe (2, 39) et la partie mobile (1, 38) à une certaine distance l'une de l'autre par action électromagnétique afin que, pendant le fonctionnement, la partie mobile (1, 38) soit supportée de façon déplaçable par rapport à la partie fixe (2, 39), caractérisé par le fait qu'il comporte des moyens optiques à fibres pour conduire les radiations lumineuses selon des trajets distincts (12—15) jusqu'à et depuis l'intervalle entre la partie fixe (2, 39) et la partie mobile (1, 38), lesdits moyens optiques à fibres émergeant en des endroits répartis sur la surface périphérique de la partie fixe (2, 39) en regard de la surface périphérique de même forme de la partie mobile (1, 38).

2. Système à palier magnétique selon la revendication 1, caractérisé par le fait que lesdits moyens optiques à fibres comprennent une série de fibres optiques conçues chacune pour transmettre la lumière dans les deux sens.

3. Système à palier magnétique selon la revendication 2, caractérisé par le fait qu'une ou plusieurs desdites fibres optiques sont couplées de manière optique audit intervalle où existe une certaine distance radiale entre la partie mobile (1, 38 et la partie fixe (2, 39).

4. Système à palier magnétique selon la revendication 2, ou 3, caractérisé par le fait qu'une ou plusieurs desdites fibres optiques sont couplées de manière optique audit intervalle où existe une certaine distance axiale entre la partie mobile (1, 38 et la partie fixe (2, 39).

5. Système à palier magnétique selon une ou plusieurs revendications précédentes, caractérisé par le fait qu'une zone périphérique (23, 24, 44) de la partie fixe (2, 39) ou de la partie mobile (1, 38) conçue pour coopérer avec lesdits moyens optiques à fibres, est rendue hautement réfléchissante à la lumière.

6. Système à palier magnétique selon la revendication 5, caractérisé par le fait qu'une telle zone périphérique est formée de métal hautement poli.

7. Système à palier magnétique selon une ou plusieurs des revendications précédentes 2 à 6, caractérisé par le fait que la partie comportant une ou plusieurs fibres optiques est fabriquée avec des passages (12, 15) aménagés à l'intérieur pour lesdites fibres optiques suivant un procédé connu en soi dans lequel de la poudre de fer et des éléments un forme de tige ou fil en cuivre ou autre matériau possédant un point de fusion plus bas que celui du fer disposés aux endroits où l'on désire des passages (12—15), ou un matériau similaire, sont compactés de manière isostatique dans la forme voulue, et après frittage, le cuivre ou le métal est absorbé dans la pièce compactée en formant les passages.

8. Système à palier magnétique selon un ou plusieurs des revendications précédentes 2 à 7, caractérisé par le fait que sur la zone périphérique de la partie mobile (2, 39) est disposé un ensemble de marques pour signal de tachymètre, (25, 45), et la partie fixe comporte une ou plusieurs fibres optiques à transmission dans les deux sens couplées de manière optique audit intervalle ou entrefer et situées en regard de ladite zone périphérique.

9. Système à palier magnétique selon une ou plusieurs des revendications précédentes 1 à 8, caractérisé par le fait que la partie fixe (1, 38) comporte des moyens de couplage (21, 21', 22, 22', 27, 28) par lesquels le système de palier est accouplé séparément à un élément d'une machine.

10. Système à palier magnétique selon une ou plusieurs des revendications précédentes 1 à 9, caractérisé par le fait que la partie mobile (2, 39) comporte des moyens de couplage (31, 32) par lesquels ladite partie mobile peut être accouplée séparément à un élément d'une machine.

11. Servo système pour régler l'action électromagnétique par laquelle la partie fixe (1, 38) et la partie mobile (2, 39) d'un système à palier magnétique peuvent être maintenues à une certaine distance l'une de l'autre, caractérisé par le fait qu'il comprend un système à palier magnétique (16) selon une ou plusieurs des revendications précédentes 1 à 10, une source de lumière couplée de manière optique à l'extrémité d'entrée des moyens optiques à fibres, des moyens de conversion électro-optique couplés optiquement à l'extrémité de sortie des moyens optiques à fibres pour convertir la lumière transmise depuis la source et réfléchie dans ledit entrefer en un signal électrique de commande sur la base duquel l'effet électromagnétique peut être réglé en fonction des variations de la distance entre la partie mobile et la partie fixe.

12. Servo système selon la revendication 11, caractérisé par le fait qu'au moins deux fibres optiques sont couplées de manière optique audit entrefer en deux points situés sur une droite parallèle à l'axe longitudinal du palier et des moyens de conversion électro-optiques (18) sont compris dans un système de commande servant à maintenir sensiblement parallèles l'une à l'autre les surfaces de la partie mobile et de la partie fixe sur la direction axiale.

13. Moteur électrique accouplé à un système à palier selon la revendication 9, caractérisé par le fait que la partie rotor du système à palier est accouplée de façon fixé à l'arbre du rotor du moteur.

14. Moteur électrique accouplé à un système à palier selon la revendication 10, caractérisé par le fait que la partie rotor du système à palier est accouplée de façon amovible à l'arbre du rotor du moteur.

15. Moteur électrique selon la revendication 14, caractérisé par le fait qu'un ventilateur (33) est monté à l'extrémité de l'arbre moteur (36) du côté opposé au système à palier, caractérisé par le fait qu'à l'extrémité de la partie rotor du palier du côté du rotor du moteur, est creusé intérieurement un espace s'étendant axialement, (34), l'accouplement (31, 32) entre le rotor du moteur et la partie rotor du système à palier comporte une ou plusieurs ouvertures (35) faisant communiquer l'espace où tourne le ventilateur (33) avec ledit espace axial (34), et ledit espace axial (34) communiquant à son tour avec ledit entrefer entre la partie rotor du système à palier et la partie rotor du système à palier, de telle manière que le ventilateur (33) exerce également une action de nettoyage.

16. Moteur électrique selon la revendication 15, en combinaison avec un servo système selon la revendication 11 ou 12.

17. Moteur électrique selon la revendication 14, en combinaison avec un servo système selon la revendication 12.

18. Servo système selon la revendication 11, comprenant un système à palier selon la revendication 8, caractérisé par le fait que les fibres optiques couplées optiquement à l'entrefer en regard de ladite zone périphérique sur laquelle sont disposées un ensemble de marques (25, 45) pour signal de tachymètre, sont couplées à leur extrémité de sortie à des moyens de conversion électro-optiques (18) afin de convertir la lumière transmise depuis la source et réfléchie sur ledit entrefer en un signal électrique de commande sur la base duquel on peut obtenir une commande de la vitesse d'un arbre accouplé à la partie rotor.

19. Système à palier magnétique suivant une ou plusieurs des revendications précédentes 2 à 7, caractérise par le fait qu'un ensemble de marques servant au contrôle de la vitesse est disposé dans une bande axiale (45) le long de la zone périphérique d'une partie, l'autre partie du système à palier comportant une fibre optique à transmission de la lumière dans les deux sens couplée de manière optique audit entrefer et située en regard de ladite bande (45).

20. Servo système pour la commande de l'action électromagnétique d'un système à palier selon la revendication 19, caractérisé par le fait qu'il comporte une source de lumière couplée de manière optique à l'extrémité d'entrée des moyens optiques à fibres, des moyens de conversion électro-optiques (18) couplées de manière optique à l'extrémité de sortie des moyens optiques à fibres pour convertir la lumière transmise depuis la source et réfléchie par ledit entrefer en des signaux de commande électriques sur la base desquels premièrement l'action électromagnétique peut être réglée dans la direction radiale en fonction des variations de la distance entre la partie mobile (38) et la partie fixe (39), et deuxièmement l'action électromagnétique peut être réglée dans la direction axiale en fonction de la vitesse linéaire de la partie mobile (38), afin qu'un effet de tampon soit exercé sur cette partie à l'approche de sa position extrême, de sorte que ladite partie ralentisse graduellement jusqu'à l'arrêt.

**Patentansprüche**

1. Magnetisches Lagersystem mit einem feststehenden Teil (2, 39), z.B. einem Statorteil, einem beweglichen Teil (1, 38), z.B. einem Rotorteil, und elektromagnetischen Mitteln (7, 8), um den feststehenden Teil (2, 39) und den beweglichen Teil (1, 38) unter Betriebsbedingungen im gegenseitigen Abstand zu halten, so daß der bewegliche Teil (1, 38) relativ zum feststehenden Teil (2, 39) bewegbar unterstützt ist, gekennzeichnet durch faseroptische Mittel zur Leitung von Lichtstrahlen auf getrennten Wegen (12—15) zum und vom Spalt zwischen dem feststehenden Teil (2, 39) und dem beweglichen Teil (1, 38), wobei die faseroptischen Mittel an Stellen münden, die längs der Umfangsfläche des feststehenden Teils (2, 39) verteilt sind, welche der entsprechend geformten Umfangsfläche des beweglichen Teils (1, 38) gegenüberliegt.

2. Magnetisches Lagersystem nach Anspruch 1, dadurch gekennzeichnet, daß die faseroptischen Mittel eine Vielzahl optischer Fasern aufweisen, die jeweils für die Lichtleitung in beiden Richtungen ausgelegt sind.

3. Magnetisches Lagersystem nach Anspruch 2, dadurch gekennzeichnet, daß eine oder mehrere der optischen Fasern dort optisch an den Spalt angeschlossen sind, wo zwischen dem beweglichen Teil (1, 38) und dem feststehenden Teil (2, 39) ein radialer Zwischenabstand vorhanden ist.

4. Magnetisches Lagersystem nach Anspruch 2, dadurch gekennzeichnet, daß eine oder mehrere der optischen Fasern dort optisch an den Spalt angeschlossen sind, wo zwischen dem beweglichen Teil (1, 38) und dem feststehenden Teil (2, 39) ein axialer Zwischenabstand vorhanden ist.

5. Magnetisches Lagersystem nach einem oder mehreren der vorhergehenden Ansprüche, dadurch gekennzeichnet, daß ein Umfangsbereich (23, 24, 44) des feststehenden Teils (2, 39) oder des beweglichen Teils (1, 38), welcher zum Zusammenwirken mit den faseroptischen Mitteln bestimmt ist, stark reflektierend ausgebildet ist.

6. Magnetisches Lagersystem nach Anspruch 5, dadurch gekennzeichnet, daß ein solcher Oberflächenbereich durch fein poliertes Metall gebildet ist.

7. Magnetisches Lagersystem nach einem oder mehreren der vorhergehenden Ansprüche 2 bis 6, dadurch gekennzeichnet, daß das eine oder mehrere optische Fasern enthaltende Teil mit darin ausgebildeten Kanälen (12—15) für die optischen Fasern nach einem für sich bekannten Verfahren hergestellt ist, wobei Eisenpulver oder ein ähnliches Material mit darin an denjenigen Stellen, wo die Kanäle (12—15) sein sollen, angeordneten stangenförmigen Elementen aus Kupfer oder einem anderen Material mit einem Schmelzpunkt, der unter dem von Eisen liegt, in der gewünschten Form isostatisch verdichtet wird und nach dem Sintern das Kupfer bzw. andere Material in der verdichteten Einheit absorbiert wird, so daß die Kanäle entstehen.

8. Magnetisches Lagersystem nach einem oder mehreren der vorhergehenden Ansprüche 2 bis 7, dadurch gekennzeichnet, daß entlang einem Umfangsbereich des beweglichen Teils (2, 39) ein Muster von Markierungen (25, 45) für Geschwindigkeitssignalgebung angeordnet ist und der feststehende Teil eine oder mehrere optische Fasern zur Lichtleitung in beiden Richtungen hat, die optisch an den Spalt angeschlossen und gegenüber dem genannten Umfangsbereich angeordnet sind.

9. Magnetisches Lagersystem nach einem oder mehreren der vorhergehenden Ansprüche 1 bis 8, dadurch gekennzeichnet, daß der feststehende Teil (1, 38) mit Verbindungsmitteln (21, 21', 22, 22', 27, 28) versehen ist, mittels derer das Lagersystem lösbar mit einem Maschinenteil verbindbar ist.

10. Magnetisches Lagersystem nach einem oder mehreren der vorhergehenden Ansprüche 1 bis 9, dadurch gekennzeichnet, daß der bewegliche Teil (2, 39) mit Verbindungsmitteln (31, 32) versehen ist, mittels derer er lösbar mit einem Maschinenteil verbindbar ist.

11. Servosystem zur Regelung einer elektromagnetischen Wirkung, durch welche der feststehende Teil (1, 38) und der bewegliche Teil (2, 39) eines magnetischen Lagersystems auf Abstand voneinander zu halten sind, gekennzeichnet durch ein magnetisches Lagersystem (16) nach einem oder mehreren der vorhergehenden Ansprüche 1 bis 10, eine optisch an das Einlaßende der faseroptischen Mittel angeschlossene Lichtquelle, einen optisch an das Auslaßende der faseroptischen Mittel angeschlossenen Elektro-optischen Umsetzer zum Umwandeln des von der Lichtquelle in den Spalt eingeleiteten und daraus wieder herausreflektierten Lichts in ein elektrisches Steuersignal, aufgrund dessen die elektromagnetische Wirkung in Abhängigkeit von Änderungen des Abstands zwischen dem beweglichen Teil und dem feststehenden Teil veränderbar ist.

12. Servosystem nach Anspruch 11, dadurch gekennzeichnet, daß wenigstens zwei optische Fasern an zwei Punkten an den Spalt angeschlossen sind, die auf einer sich parallel zur Längsachse des Lagers erstreckenden Linie liegen, und der elektro-optische Umsetzer (18) in einem Steuersystem enthalten ist, welches die sich in axialer Richtung erstreckenden Flächen des beweglichen Teils und des feststehenden Teils im wesentlichen parallel zueinander hält.

13. Elektromotor, welcher mit einem Lagersystem nach Anspruch 9 verbunden ist, wobei der Rotorteil des Lagersystems fest mit der Ankerwelle des Motors gekuppelt ist.

14. Elektromotor, welcher mit einem Lagersystem nach Anspruch 10 verbunden ist, wobei der Rotorteil des Lagersystems lösbar mit der Ankerwelle des Motors gekuppelt ist.

15. Elektromotor nach Anspruch 14 mit einem auf dem der Seite des Lagersystems entgegengesetzten Ende der Motorwelle angebrachten Gebläse (33), dadurch gekennzeichnet, daß an dem zum Anker des Motors weisenden Ende des Rotorteils des Lagers ein sich axial erstreckender Innenraum (34) ausgehöhlt ist, die Verbindung (31, 32) zwischen dem Anker des Motors und dem Rotorteil des Lagers mit einer oder mehreren Öffnungen (35) versehen ist, durch welche der Raum, in dem das Gebläse (33) arbeitet, mit dem sich axial erstreckenden Raum (34) in Verbindung steht, der seinerseits Anschluß hat an den Spalt zwischen Rotorteil und Statorteil des Lagersystems, all dies derart, daß das Gebläse auch eine Reinigungswirkung hat.

16. Elektromotor nach Anspruch 15 in Verbindung mit einem Servosystem nach Anspruch 11 oder Anspruch 12.

17. Elektromotor nach Anspruch 14 in Verbindung mit einem Servosystem nach Anspruch 12.

18. Servosystem nach Anspruch 11 mit einem Lagersystem nach Anspruch 8, dadurch gekennzeichnet, daß die optischen Fasern, die optisch an den Spalt gegenüber demjenigen Umfangsbereich angeschlossen sind, wo ein Muster (25, 45) von Markierungen für Geschwindigkeitssignalgebung angeordnet ist, mit ihrem Auslaßende an einen elektrooptischen Umsetzer (18) angeschlossen sind, um Licht, welches von der Lichtquelle in den Spalt eingeleitet und daraus wieder herausreflektiert wird, in ein elektrisches Steuersignal umzuwandeln, aufgrund dessen eine Geschwindigkeitssteuerung einer mit dem Rotorteil verbundenen Welle erhalten wird.

19. Magnetisches Lagersystem nach einem oder mehreren der vorhergehenden Ansprüche 2 bis 7, dadurch gekennzeichnet, daß ein Muster von Markierungen zur Geschwindigkeitssteuerung in einem axialen Streifen (45) entlang eines Umfangsbereichs des einen Teils des Lagersystems angebracht ist und der andere Teil des Lagersystems eine optische Faser zur Übertragung von Licht in beiden Richtungen aufweist, welche gegenüber dem Streifen (45) an den Spalt angeschlossen ist.

20. Servosystem zur Steuerung der elektromagnetischen Wirkung eines Lagersystems nach Anspruch 19, gekennzeichnet durch eine an das Einlaßende der faseroptischen Mittel angeschlossene Lichtquelle und einen an das Auslaßende der Faseroptischen Mittel angeschlossenen elektro-optischen Umsetzer (18) zum Umwandeln des von der Lichtquelle in den Spalt eingeleiteten und daraus wieder herausreflectierten Lichts in elektrische Steuersignale, aufgrund derer erstens die elektromagnetische Wirkung in radialer Richtung in Abhängigkeit von Änderungen des Abstands zwischen dem beweglichen Teil (38) und dem Feststehenden Teil (39) regelbar ist und zweitens die elektromagnetische Wirkung in axialer Richtung in Abhängigkeit der linearen Geschwindigkeit des beweglichen Teils (38) regelbar ist, nämlich derart, daß auf dieses Teil bei Annäherung an eine Endlage ein Puffereffekt ausübbar ist, so daß es langsam anhaltbar ist.

FIG.1

11
7
8
II
10
2
9
4
3
1
5
6

12
II
13
14
15

8
15'''
15''
FIG.2
8'
8''''
15
15'
8''

FIG.3

FIG.4

FIG.5

FIG.6

FIG.7

## FIG.8

## FIG.9

6